(19) Europäisches Patentamt
European Patent Office
Office européen des brevets

(11) Veröffentlichungsnummer: **0 004 339**
**A2**

(12) # EUROPÄISCHE PATENTANMELDUNG

(21) Anmeldenummer: **79100776.8**

(22) Anmeldetag: **15.03.79**

(51) Int. Cl.[2]: **B 01 K 1/00,** C 25 B 1/00

(30) Priorität: **16.03.78 DE 2811517**

(43) Veröffentlichungstag der Anmeldung: **03.10.79 Patentblatt 79/20**

(84) Benannte Vertragsstaaten: **BE CH FR GB IT LU NL SE**

(71) Anmelder: **Reznik, Szmuel, Dr., 47, rue Guersat, Paris XVII (FR)**
(84) Benannte Vertragsstaaten: **BE CH FR GB IT LU NL SE**

(71) Anmelder: **Glezerman, Josef, Rosenheimer Strasse 139, D-8000 München 80 (DE)**
(84) Benannte Vertragsstaaten: **BE CH FR GB IT LU NL SE**

(72) Erfinder: **Reznik, Szmuel, Dr., 47, rue Guersat, Paris XVII (FR)**
Erfinder: **Glezerman, Josef, Rosenheimer Strasse 139, D-8000 München 80 (DE)**

(74) Vertreter: **Bartels, Hans et al, Patentanwälte H. Bartels Dipl.-Chem. Dr. Brandes, Dr.-Ing. Held Dipl.-Phys. Wolff Thierschstrasse 8, D-8000 München 22 (DE)**

(54) **Verfahren zur Gewinnung von Grenzflächenenergie durch elektrolytisch-thermische Spaltung von Wasser, wässrigen Systemen oder organischen Systemen.**

(57) Die Erfindung betrifft ein Verfahren zur Gewinnung von Grenzflächenenergie durch elektrolytisch-thermische Spaltung von Wasser, wäßrigen Systemen oder organischen Systemen in Gegenwart von Stickstoff und/oder Stickstoff enthaltenden Verbindungen in einem Elektrolysator bei einer an die Elektroden des Elektrolysators angelegten Spannung von 2 bis 1000 Volt und einer Stromdichte von 0,001 Ampère/mm² bis 10 Ampère/mm². Die Erfindung ermöglicht (A) die Herstellung von Distickstoffdioxid in vergleichsweise hohen Konzentrationen im Gemisch mit Wasserstoff und Stickstoff an der Kathode eines Elektrolysators, gegebenenfalls in Verbindung mit Sauerstoff, und die nutzanbringende Verwendung von Gasmischungen mit oder aus Distickstoffoxid und Wasserstoff. Die Erfindung ermöglicht des weiteren (B) die Gewinnung großer Energiemengen durch elektrolytisch-thermische Spaltung von Distickstoffoxid sowie die nutzanbringende Verwendung dieser Energiemengen.

Fig. 6 zeigt einen Elektrolysator aus Behälter (1), Anode (3) mit ringförmigem Teil (6), Kathode (4) mit ringförmigem Teil (7), Gleichrichter (5) sowie dem Elektrolyten (2).

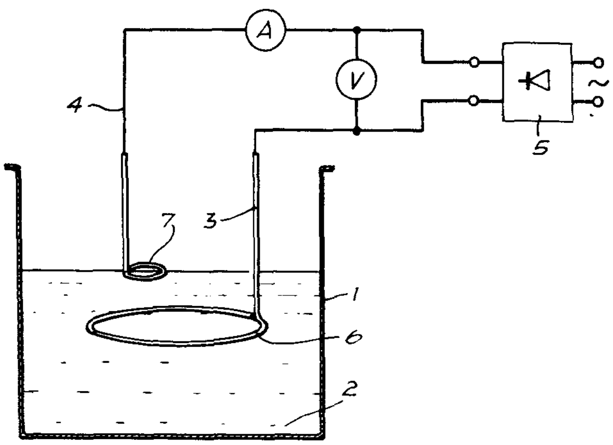


EP 0 004 339 A2

Es ist allgemein bekannt, Wasser auf elektrolytischem Wege nach der Brutto-Gleichung $H_2O \longrightarrow 1/2\ O_2 + H_2$ in Sauerstoff und Wasserstoff zu spalten. Wegen der vergleichsweise geringen Leitfähigkeit des Wassers für den elektrischen Strom werden für die Elektrolyse in der Regel wäßrige Lösungen von Säuren oder Basen, z.B. von NaOH oder KOH verwendet. Die elektrolytische Zersetzung von Wasser zur Gewinnung von Wasserstoff und Sauerstoff ist von technischer Bedeutung, und zwar insbesondere in den Fällen, in denen vergleichsweise billiger Strom zur Verfügung steht oder es auf eine hohe Reinheit, insbesondere des zu gewinnenden Wasserstoffs ankommt.

Für die elektrolytische Spaltung von Wasser sind die verschiedensten Elektrolysezellen und Elektrolyseanlagen bekannt geworden. Zu nennen sind z.B. die sogenannten unipolaren und bipolaren Zellen, Elektroliseure vom sogenannten Filterpressentyp sowie der Zdansky-Lonza-Elektrolytor (vergl. beispielsweise Ullmann, "Enzyklopädie der Technischen Chemie", 18. Band, Seiten 523 bis 527).

Kennzeichnend für die bekannten Elektrolysezellen und -anlagen ist die Verwendung von Elektroden, die dem korrosiven Angriff der erzeugten Gase zu widerstehen vermögen und eine möglichst niedrige Überspannung aufweisen sowie die Anordnung eines Diaphragmas zwischen den Elektroden, das die Vermischung der an der Anode und der Kathode erzeugten Gase vermindern soll, dem Stromfluß dabei jedoch einen geringen Widerstand bietet und gegenüber dem Elektrolyten chemisch resistent ist. Nach den bekannten Verfahren läßt sich aus dem Anodenraum ein 99,5 mit 99,7 volumen-%iger Sauerstoffstrom und aus dem Kathodenraum ein 99,9 volumen-%iger Wasserstoffstrom abziehen.

Da die Produktion einer Zelle oder eines Elektrolyseurs von der zugeführten Stromstärke abhängt und die Stromstärke eine Funktion der Zellenspannung ist, kann die Produktion durch Regelung der

Zellenspannung dem Bedarf an Wasserstoff angepaßt werden. Typisch für die Arbeitsweise der bekannten Verfahren ist die Anwendung kleiner Spannungen, jedoch hoher Stromstärken.

Es wurde nun überraschenderweise gefunden, daß es entgegen den bisherigen Vorstellungen der Fachwelt möglich ist, durch Elektrolyse von Wasser, wäßrigen Systemen oder organischen Systemen kathodisch nicht nur Wasserstoff, sondern vielmehr gleichzeitig auch Distickstoffoxid oder Stickoxidul ($N_2O$) und Stickstoff oder Wasserstoff, Stickstoff und Sauerstoff zu erzeugen.

Es wurde überraschenderweise gefunden, daß sich an der Kathode einer Zelle ein Wasserstoff-Distickstoffoxid-Stickstoffgemisch erzeugen läßt, wenn man (a) bei vergleichsweise hohen Spannungen und einer vergleichsweise geringen Stromstärke arbeitet, (b) die Elektrolyse in Gegenwart von molekularem Stickstoff oder einer Stickstoff enthaltenden Verbindung durchführt und (c) ein geeignetes Elektrodenmaterial auswählt.

Erfindungsgemäß lassen sich bei vergleichsweise kleinen Spannungen von beispielsweise 2 bis 10 Volt oder bis zu 20 Volt $H_2$, $N_2O$ und $N_2$ und bei vergleichsweise größeren Spannungen von über 10 oder gegebenenfalls über 20 bis etwa 500 oder bis 1000 Volt $H_2$, $N_2$ und $O_2$ erzeugen. Gegebenenfalls kann auch bei noch höheren Spannungen gearbeitet werden.

Gegenstand der Erfindung ist ein Verfahren zur Gewinnung von Grenzflächenenergie durch elektrolytisch-thermische Spaltung von Wasser, wäßrigen Systemen oder organischen Systemen, das dadurch gekennzeichnet ist, daß man Wasser, wäßrige Systeme oder organische Systeme, dessen bzw. deren Leitfähigkeit gegebenenfalls durch Zusatz eines Elektrolyten erhöht wird, in Gegenwart von Stickstoff und/oder mindestens einer Stickstoff enthaltenden Verbindung in einem Elektrolysator mit mindestens einer Anode und mindestens einer Kathode unter Erzeugung von Wasserstoff, Distickstoffoxid und Stickstoff oder Wasserstoff, Stickstoff und Sauerstoff an der Kathode elektrolytisch spaltet.

Distickstoffoxid ($N_2O$) ist bekanntlich eine endotherme Verbindung, die unter der Einwirkung elektrischer Funken oder z.B. beim Leiten durch ein auf Rotglut erhitztes Rohr unter Wärmeentwicklung größtenteils nach der folgenden Gleichung:

$$2\ N_2O \longrightarrow 2\ N_2 + O_2 + E$$

zerfällt.

Die bisher gebräuchlichste Darstellungsmethode des Distickstoffoxides beruht auf der thermischen Zersetzung von Ammoniumnitrat nach der folgenden Gleichung:

$$NH_4NO_3 \longrightarrow N_2O + 2\ H_2O$$

Die Erfindung ermöglicht (A) die Herstellung von Distickstoffdioxid in vergleichsweise hohen Konzentrationen im Gemisch mit Wasserstoff und Stickstoff auf elektrolytischem Wege, gegebenenfalls in Verbindung mit Sauerstoff, und die nutzanbringende Verwendung von Gasmischungen mit oder aus Distickstoffoxid und Wasserstoff.

Die Erfindung ermöglicht des weiteren (B) die Gewinnung großer Energiemengen durch elektrolytisch-thermische Spaltung von Distickstoffoxid sowie die nutzanbringende Verwendung dieser Energiemengen.

Gemäß einer vorteilhaften Ausführungsform der Erfindung verfährt man in der Weise, daß man zunächst an der Kathode eines Elektrolysators einen Kondensator aus (A) der negativen Kathodenoberfläche, (B) positiven Protonen als positiver Kondensatoroberfläche und einem Gemisch aus Stickstoff und Sauerstoff als Dielektrikum erzeugt.

Erreichen läßt sich dies beispielsweise durch:

a) Verwendung eines Stickstoff enthaltenden Wäßrigen oder organischen Elektrolyten,
b) geeigneten elektrolytischen Parametern, d.h. Anlegen einer vergleichsweise geringen Spannung sowie Erzeugung einer Stromdichte von 0,001 bis 10 Ampère/$mm^2$ an Kathode wie auch Anode und
c) Auswahl geeigneter Elektroden.

Es können jedoch auch noch höhere Stromdichten angewandt werden.
Taucht man erfindungsgemäß beispielsweise in einen Stickstoff enthaltenden Elektrolyten, z.B. eine 1 normale Natriumnitratlösung, ein Elektrodenpaar der später noch näher beschriebenen Zusammensetzung und legt man an die Elektroden mittels eines Gleichrichters eine Spannung an (bei einer Stromdichte von 0,001 bis 10 Ampère/$mm^2$), so geschieht ganz offensichtlich folgendes:

Zunächst bildet sich ein Kondensator an der Grenzfläche Kathode-Elektrolyt aus a) der negativen Kathodenoberfläche, b) positiven Protonen als positiver Kondensatoroberfläche und c) einem Gemisch aus Stickstoff und Sauerstoff als Dielektrikum.

Bei einer Mindestspannung, die von System zu System verschieden ist, wird der Kondensator gebrochen, so daß ein Stromdurchgang ermöglicht wird. Gleichzeitig entsteht ein Gemisch aus Stickstoff, Distickstoffoxid und Wasserstoff.

Der zur Durchführung des erfindungsgemäßen Verfahrens verwendete Elektrolysator kann aus einer einfachen Elektrolysezelle bestehen, d.h. einer Zelle oder einem Gefäß mit mindestens einer Kathode und mindestens einer Anode, denen die zur elektrolytisch-thermischen Spaltung benötigte elektrische Energie zugeführt werden kann. Der Elektrolysator oder die Elektrolysezelle kann dabei aus einer Kammer bestehen oder zwei Kammern, d.h. der Kathodenraum kann vom Anodenraum auch getrennt sein. So kann der Elektrolysator beispielsweise U-förmig ausgebildet sein. Das eigentliche Elektrolysegefäß oder die Elektrolysezelle kann in verschiedener Weise ausgestaltet sein und beispielsweise aus Glas, Kunststoff, z.B. Polypropylen, Teflon, Polyvinylchlorid oder einem anderen nichtmetallischen Werkstoff, keramischem Material oder auch einem Metall oder einer Metall-Legierung bestehen oder einer Kombination derartiger Werkstoffe.

Zur Durchführung des erfindungsgemäßen Verfahrens läßt sich beispielsweise ein eine ausreichende Leitfähigkeit aufweisendes Wasser mit einem Gehalt an einer Stickstoff enthaltenden Verbindung verwenden. In vorteilhafter Weise kann Wasser elektrolysiert werden, das als Elektrolyten einen Stickstofflieferanten enthält. Wird durch den verwendeten Stickstofflieferanten die gewünschte oder erforderliche Leitfähigkeit nicht erreicht, so kann das wäßrige System außer dem Stickstofflieferanten zusätzlich einen beliebigen Elektrolyten enthalten, der die erforderliche Leitfähigkeit bewirkt.

Als Stickstofflieferanten geeignet sind die verschiedensten Stickstoff enthaltenden Verbindungen, und zwar anorganischer wie auch organischer Natur. Beispielsweise kann es sich bei den Stickstoff enthaltenden Verbindungen um Salze handeln, beispielsweise Salze Stickstoff enthaltender Säuren, wie beispielsweise um Salze der Salpetersäure. In diesem Falle liegt der Stickstoff im Anion vor.

Verwendbar sind jedoch auch Salze, in denen der Stickstoff im Kation vorliegt, z.B. Ammoniumverbindungen. Ferner geeignet sind Stickstoff enthaltende Verbindungen, die sich auf elektrolytischem Wege zersetzen lassen. In besonders vorteilhafter Weise werden in Wasser oder wäßrigen Systemen lösliche oder mindestens teilweise lösliche Stickstoff enthaltende Verbindungen verwendet. Gegebenenfalls können jedoch auch Lösungsvermittler verwendet werden, um größere Mengen an Stickstoff enthaltenden Verbindungen in Lösung zu bringen.

Unter "wäßrigen Systemen" sind die verschiedensten wäßrigen Systeme zu verstehen, die das für die elektrolytisch-thermische Spaltung erforderliche Wasser enthalten. Dies bedeutet, daß zur Durchführung des Verfahrens außer wäßrigen Lösungen auch beispielsweise hochviskose wäßrige Massen verwendet werden können oder Stoffe, die das zur Durchführung der Elektrolyse erforderliche Wasser absorbiert enthalten und bei Durchführung der Elektrolyse freisetzen.

Unter "organischen Systemen" sind solche zu verstehen, die anstelle von Wasser Verbindungen enthalten, die zur Bildung von Wasser befähigt sind, z.B. nach der Gleichung

$$A - H + R - OH \rightleftharpoons H_2O + AR$$

Ein solches System kann somit z.B. aus einer Säure und einem Alkohol und gegebenenfalls einer Stickstoff liefernden Verbindung bestehen. Die Säure kann z.B. aus Phosphorsäure bestehen und der Alkohol z.B. aus Methyl-, Äthyl- oder Propylalkohol oder einem anderen ein- oder mehrwertigen Alkohol.

Verwendbar sind auch wäßrig-organische Systeme, d.h. Kombinationen von wäßrigen und organischen Systemen, d.h. z.B. wäßrige alkoholische Lösungen.

Die Konzentration des Stickstofflieferanten in dem Wasser, dem wäßrigen System oder organischen System kann sehr verschieden sein. So kann der Anteil des Stickstoff enthaltenden Lieferanten beispielsweise bei 0,1 bis 90 Gew.-% liegen, insbesondere bei etwa 5 bis 50 Gew.-%. Die im Einzelfalle optimale Menge an Stickstofflieferanten hängt dabei von der Größe der Elektrolysezelle, der angewandten Spannung und Stromdichte, den ausgewählten Elektroden und der Zusammensetzung der herzustellenden Gasmischung ab.

Als Stickstoff enthaltende Verbindungen eignen sich, wie bereits

erwähnt, die verschiedensten Verbindungen, die den für die Bildung des Distickstoffoxides erforderlichen Stickstoff liefern. Genannt seien beispielsweise:

Salpetersäure sowie ihre Salze, z.B. Natrium-, Kalium-, Ammonium- oder Calciumnitrat sowie andere Nitrate;

Aminosäuren und ihre Salze;

Nitriloverbindungen, z.B. die Nitrilotriessigsäure und ihre Salze;

Nitrosoverbindungen (Verbindungen mit der Gruppe -N=O), z.B. salpetrige Säure und deren Salze und Ester sowie Untersalpetersäure und deren Salze sowie Nitrosylschwefelsäure;

Harnstoff und Harnstoffderivate;

Hydrazin und Hydrazinderivate;

Hydroxylamin und Hydrxylaminderivate;

Ammoniumverbindungen;

Azide;

Nitride und dergleichen.

Gemäß einer vorteilhaften Ausgestaltung der Erfindung verwendet man als Elektrolyten Meerwasser, dem in vorteilhafter Weise noch eine Stickstoff enthaltende Verbindung, z.B. eine Stickstoff enthaltende Säure oder ein Salz hiervon, beispielsweise ein Nitrat zugesetzt werden kann.

Die Kathode kann in vorteilhafter Weise zum Beispiel bestehen aus:

Aluminium und Aluminiumlegierungen, beispielsweise Rein-Aluminium, Aluminium-Magnesiumlegierungen und Aluminium-Kupferlegierungen (Duraluminium),

Nickel und den verschiedensten Nickellegierungen, wie z.B.

a) Nickel;
b) Nickel-Kupferlegierungen, z.B. solchen mit 54 % Cu, 45 % Ni und 1 % Mn (Konstantan);

c) Nickel-Chromlegierungen, z.B. solchen aus

80 % Ni und 20 % Cr;
35 % Ni, 18,5 % Cr, Rest Fe;
36 % Ni, 20 % Cr, Rest Fe;
90 % Ni, 10 % Cr (Chromel);

d) Nickel-Legierungen vom Inconel-Typ, wie z.B. 78,5 % Ni, 14 % Cr, 6,5 % Fe, 0,2 % Cu, 0,25 % Mn und 0,25 % Si oder 70 % Ni, 14 bis 16 % Cr, 2,5 bis 2,75 % Ti, 0,7 bis 1,2 % Nb, 0,4 bis 1 % Al, 5 bis 9 % Fe, 0,3 bis 1 % Mn;

e) Nickel-Legierungen vom Durimet-Typ, wie z.B. mit 19,5 bis 23 % Ni, 18 bis 22 % Cr, 2,75 bis 3,75 % Ci, 0,5 bis 0,75 % Mn, 1 bis 1,5 % Mo und 0,25 bis 0,45 % Cu;

f) Nickel-Legierungen vom Monel-Typ mit mindestens 63 % Ni und 28 bis 34 % Cu;

g) Nickel-Legierungen vom Nickelin-Typ mit z.B. 30 % Ni, 67 % Cu und 3 % Mn oder 32 % Ni und 68 % Cu;

h) Nickel-Legierungen vom Cupro-Nickeltyp mit 70 % Cu und 30 % Ni.

Chrom und Chromlegierungen, z.B. Chrom-Nickellegierungen mit beispielsweise 20 % Cr und 80 % Ni, Chromstähle mit z.B. 4 bis 30 % Cr, insbesondere rostfreie Chromstähle mit 13 bis 16 % Cr sowie Chromnickelstähle und Chrom-Wolframlegierungen (Schnellstähle), z.B. mit 3,5 bis 5 % Cr, 12 bis 14 % W, 1 % V, 0,6 bis 0,9 % C (Rest Fe);

Vanadin und Vanadinstählen, d.h. legierten oder unlegierten Stählen, denen vergleichsweise kleinen Mengen an Vanadium zugesetzt werden, z.B. 0,1 bis 1 %, z.B. Stähle mit 0,4 bis 1 % V, 8 bis 10 % W und 2 % Cr;

Titan und Titanlegierungen;

Eisenstählen, insbesondere rostfreien Stählen, z.B. Eisen-Chrom 400 und Eisen-Chrom-Nickel 300;

Tantal und Tantallegierungen;

Wolfram und Wolframlegierungen;

Blei- und Bleilegierungen, z.B. Blei-Silber-Antimonlegierungen;

Zirkonium- und Zirkoniumlegierungen;

Molybdän und Molybdänlegierungen;

Gold und Goldlegierungen;

Platin und Platinlegierungen;

Uran und Uranlegierungen sowie

Graphit.

In besonders vorteilhafter Weise besteht die Kathode aus: Platin, Titan, Titanlegierungen, Wolfram, Blei oder Aluminium.

Die Anode besteht beispielsweise aus Titan oder einer Titanlegierung, Tantal, Platin, Aluminium oder einer Aluminiumlegierung des angegebenen Typs, Graphit, Gold oder einer Goldlegierung oder aus Blei oder einer Bleilegierung. Wesentlich ist, daß sich die Elektrode nicht elektrochemisch im Elektrolyten löst. Sie soll ein guter Leiter von Metall zu Elektrolyten sein.

Vorzugsweise besteht die Anode aus: Platin, Titan, Gold, Aluminium oder Graphit.

Die Form von Kathode und Anode kann sehr verschieden sein, d.h. Anode und Kathode können beispielsweise Stabelektroden sein oder beispielsweise auch in Form von Spiralen vorliegen.

In der Zeichnung sind beispielsweise fünf verschiedene Elektrodenpaare dargestellt, die sich zur Durchführung des erfindungsgemäßen Verfahrens eignen.

Der kleinste Abstand von Kathode zu Anode im Elektrolyten kann beispielsweise 0,1 mm bis 10 cm oder mehr betragen. Vorzugsweise wird der Abstand möglichst gering gewählt, weil die dem System zuzuführende Energie mit dem Elektrodenabstand steigt.

Vorzugsweise ist die Oberfläche der Anode größer als die der Kathode. Das Verhältnis von der Oberfläche der Anode zur Oberfläche der Kathode ist vorzugsweise größer als 1 und kleiner als 100.

Als vorteilhaft hat es sich erwiesen, wenn die anodische Stromdichte kleiner ist als die kathodische Stromdichte.

In den Figuren 1 bis 5 stellt jeweils A die Anode und K die Kathode dar. Die Eintauchtiefe der Elektroden in den Elektrolyten kann verschieden sein.

In Figur 6 ist ein zur Durchführung des erfindungsgemäßen Verfahrens geeigneter Elektrolysator im Schema dargestellt. Der schematische Elektrolysator besteht aus einem Behälter 1, in dem sich der Elektrolyt 2, z.B. eine wäßrige Nitratlösung befindet. In dem Behälter 1 befinden sich die Elektroden 3 und 4, d.h. die Anode 3 und die Kathode 4. Ihre unteren Teile sind zu Ringen 6 bzw. 7 ausgestaltet. Im Falle der in Figur 6 dargestellten Ausführungsform taucht der untere Teil der Anode voll in den Elektrolyten ein, während die Kathode nur wenig in den Elektrolyten eintaucht, die Oberfläche des Elektrolyten jedoch berührt. Die Elektroden sind an den Gleichrichter 5 angeschlossen.

Die Elektroden können selbstverständlich auch tiefer als in Figur 6 dargestellt in den Elektrolyten eintauchen. Auch kann die Kathode den Elektrolyten gerade nur berühren. Der obere Teil der Elektroden, insbesonder der nicht in den Elektrolyten eintauchende Teil, kann isoliert sein.

Der "kleinste" Abstand der Elektroden zueinander ist der Abstand von Ring 6 zu Ring 7. Der Abzug der kathodisch erzeugten Gase kann über eine über die Kathode 4 geführte, nicht dargestellte Leitung erfolgen.

Das bei Einhaltung der angegebenen drei Parameter kathodisch erzeugte Gemisch aus $N_2O$, $N_2$ und $H_2$ oder $H_2$, $N_2$ und $O_2$, läßt sich aus dem Kathodenraum abziehen und verwerten.

Die Erfindung ermöglicht beispielsweise die Herstellung von Gasgemischen, die zu 20 bis 60 Vol.-% aus $N_2O$ bestehen. Typische erfindungsgemäß herstellbare Gasgemische bestehen z.B., in Volumen-% ausgedrückt, aus:

1. 30% $N_2O$, 60% $H_2$ und 10% $N_2$;
2. 40% $N_2O$, 40% $H_2$ und 20% $N_2$;
3. 60% $N_2O$, 30% $H_2$ und 10% $N_2$.

Die Zusammensetzung des an der Kathode erzeugten und aus dem Kathodenraum ausgeführten Gasgemisches hängt im Einzelfalle von der angewandten Spannung, der Zusammensetzung des Elektrolyten und der Zusammensetzung von Kathode und Anode ab.

Wie bereits dargelegt, läßt sich erfindungsgemäß z.B. ein Gemisch aus Distickstoffoxid, Wasserstoff und Stickstoff gewinnen und aus dem Kathodenraum bzw. dem Elektolysator abziehen und verwenden.

In diesem Falle verfährt man vorzugsweise in der Weise, daß man mit Spannungen von 2 bis etwa 20 Volt, z.B. 2 bis 15 oder 2 bis 10 Volt und Stromdichten von 0,001 bis 10 Ampére/$mm^2$ arbeitet. Erhöht man jedoch nun die Spannung des Systems auf eine sog. "Explosiv-Spannung", die im Einzelfalle abhängig ist von

a) der Zusammensetzung des Elektrolyten
b) der chemisch-metallurgischen Zusammensetzung der Kathode und
c) der angewandten Stromdichte und Spannung, die z.B. bei 10, 12 oder 15 Volt oder darüber oder darunter liegen kann,

so erfolgt infolge Auftretens hoher Temperaturen von über 500°C eine thermische Spaltung des $N_2O$ gemäß folgender Gleichung:

$$2\ N_2O \longrightarrow 2\ N_2 + O_2 + E$$

d.h. an der Kathode entsteht neben Stickstoff auch Sauerstoff.

Es ist anzunehmen, daß sich an der Kathode dabei folgende Reaktionen abspielen:

$$N_2O + e^- \longrightarrow N_2 + O^-$$
$$O^- + N_2O \longrightarrow N_2 + O_2^-$$
$$H_2^+ + O^- \longrightarrow H_2O + E$$

Dies bedeutet, daß an der Kathode außer $H^+$ und $H_2^+$ auch noch $O^-$ und $O_2^-$ auftreten und daß infolge der erfindungsgemäß erzielbaren hohen Temperaturen Wasser verdampft wird, d.h. Wasserdampf erzeugt wird.

Zur Durchführung des erfindungsgemäßen Verfahrens verwendbar sind Gleichspannungen, jedoch auch Wechselspannungen.

Wie bereits dargelegt, kann die geometrische Form der Elektroden sehr verschieden sein. Dies gilt auch für den Elektrolysator oder die Elektrolysezelle. So kann ein Elektrodenpaar, auch als "Brenner" bezeichenbar, z.B. zu einer Zündkerze ausgestaltet sein, wie sie beispielsweise und üblicherweise zum Zünden von explosiven Gas-Luftgemischen, z.B. Benzin-Luftgemischen, verwendet werden. Die Elektroden können dabei je nach der Verwendung des Brenners auch beträchtlich größer sein. Auch kann die aus dem Kerzenkörper austretende Elektrodenoberfläche größer sein. Ferner lassen sich mehrere Elektrolysatoren oder Elektrolysezellen gemeinsam betreiben oder koppeln.

Auch können die Oberflächen der Elektroden im Verhältnis zum Elektrolyten verschieden sein. Als vorteilhaft hat es sich beispielsweise erwiesen, mit einem Strom von 0,1 bis 5 Ampère pro Liter Elektrolyt zu arbeiten.

Das erfindungsgemäße Verfahren ermöglicht z.B.:

1.) die Herstellung und Isolierung eines Gasgemisches aus $N_2O$, $H_2$ und $N_2$ (gegebenenfalls unter gleichzeitiger Gewinnung von $O_2$), das sich komprimieren und gegebenenfalls nach Abtrennen von Begleitgasen, wie $N_2$ und $O_2$ zum Betrieb von Explosionsmotoren, z.B. Kraftfahrzeugmotoren, verwenden läßt;

2.) die direkte Erzeugung von Explosionen durch Erzeugung explosiver $N_2O$-$H_2$-Gemische und damit den Betrieb von Explosionsmotoren;

3.) die Herstellung von $N_2O$-$H_2$-Gemischen, die Trennung der Gemische und die Weiterverwendung der beiden Gase, z.B. zum Betrieb von Explosionsmotoren;

4.) die Erzeugung von Wärmeenergie;

5.) die Erzeugung von warmen Wasser;

6.) die Erzeugung von Dampf hoher Temperaturen;

7.) die Entsalzung von Wasser, z.B. Meerwasser durch Kondensation des erzeugten Wasserdampfes, gegebenenfalls unter Ausnutzung der Kondensationswärme und

8.) die Erzeugung elektrischer Energie durch explosive Verbrennung der abgezogenen Gasgemische, z.B. über eine Turbine oder eines Motors für Betriebsenergie.

Wie bereits dargelegt, braucht die Kathode nicht in den Elektrolyten oder das wäßrige System zu tauchen. Erforderlich ist vielmehr nur, daß sie die Oberfläche des Elektrolyten berührt. In diesem Falle bildet sich vermutlich an der Grenzfläche: Kathode-Luft zunächst ein Kondensator aus: der negativen Kathodenoberfläche, positiv geladenen Stickstoff als positiver Kondensatoroberfläche und einem Gemisch aus Stickstoff und Sauerstoff als Dielektrikum aus, der bei Erhöhung der Spannung durchschlägt.

Die zur Durchführung des erfindungsgemäßen Verfahrens verwendeten Elektrolyten lassen sich nach oder vor Erschöpfung durch Zusatz von Stickstoff enthaltenden Verbindungen und/oder frischem Elektrolyten oder entsprechenden Lösungen oder Dispersionen ergänzen oder ersetzen.

Als besonders vorteilhaft haben sich z.B. folgende Elektroden-Kombinationen erwiesen:

| Kathode | Anode |
|---|---|
| Al | Al |
| Pt | Ti |
| Ti | Ti |
| Pt | Pt |

Beispiel

Verwendet wurde eine Elektrolysezelle mit einer Kathode und einer Anode, die an einen Gleichrichter, der die Erzeugung einer Spannung von bis zu 200 Volt bei einer Stromdichte von 0,001 bis zu 10 Ampère/$mm^2$ ermöglichte, angeschlossen waren. Die Kathode bestand aus Platin und hatte eine Oberfläche von 50 $mm^2$. Die Anode bestand aus Titan und hatte eine Oberfläche von 1 $cm^2$. Der Elektrodenabstand betrug 5 mm.

Der Elektrolyt bestand aus einer 0,1 normalen Natriumnitratlösung. Die Elektrolytmenge betrug 500 ml. Die Anode tauchte auf eine Länge von 0,5 cm in den Elektrolyten ein. Die Kathode berührte die Elektrolytoberfläche.

Bei einer anodischen Stromdichte von 0,04 Ampère/$mm^2$ und einer kathodischen Stromdichte von 0,2 Ampère/$mm^2$ sowie einer Spannung von 10 Volt wurde über der Zelle ein Gas aufgefangen, das folgende Zusammensetzung hatte:

31% $N_2O$;
59% $H_2$ und
10% $N_2$.

In einem weiteren Versuch wurde die Spannung auf 20 Volt erhöht. Die Stromdichte wurde wie folgt verändert: Die kathodische Stromdichte betrug 0,4 Ampère/$mm^2$ und die anodische Stromdichte 0,08 Ampère/$mm^2$.
Aufgefangen wurde ein Gasgemisch bestehend aus $N_2$, $O_2$ und $H_2$. Das Verhältnis von $N_2$:$O_2$ lag bei 2:1. Das Gas bestand zu 40% aus $H_2$, zu 40% aus $N_2$ und zu 20% aus $O_2$. Des weiteren entstand Wasserdampf.

Entsprechende Ergebnisse wurden dann erhalten, wenn anstelle der Platinkathode beispielsweise eine Kathode aus rostfreiem Stahl, Aluminium oder Titan verwendet wurde. Entsprechende Ergebnisse wurden ferner dann erhalten, wenn als Anode eine Anode aus Aluminium, Platin, Graphit oder Gold verwendet wurde.

Wurde der Elektrodenabstand auf 10 mm erhöht, so mußte die angelegte Spannung auf 30 Volt erhöht werden.

Entsprechende Ergebnisse wurden dann erhalten, wenn anstelle des Natriumnitrat-Elektrolyten ein Phosphorsäure-Elektrolyt verwendet wurde, dem gegebenenfalls Natriumnitrat in einer 0,1 molaren Konzentration zugesetzt wurde.

-------

PATENTANWÄLTE
~~Dr.-Ing. Wolff,~~ H. Bartels, Dr. Brandes
Dr.-Ing. Held, Dipl.-Phys. Wolff
8 MÜNCHEN 22, Thierschstraße 8

0004339

Dr. S. Reznik, Paris XVII, 47 rue Guersat

und

J. Glezerman, 8 München 80, Rosenheimer Straße 139

Verfahren zur Gewinnung von Grenzflächenenergie durch elektrolytisch-thermische Spaltung von Wasser, wäßrigen Systemen oder organischen Systemen

15. März 1979

Reg. Nr. 125 750

## PATENTANSPRÜCHE

1. Verfahren zur Gewinnung von Grenzflächenenergie durch elektrolytisch-thermische Spaltung von Wasser, wäßrigen Systemen oder organischen Systemen, dadurch gekennzeichnet, daß man Wasser, wäßrige oder organische Systeme dessen bzw. deren Leitfähigkeit gegebenenfalls durch Zusatz eines Elektrolyten erhöht wird, im Gegenwart von Stickstoff und/oder mindestens einer Stickstoff enthaltenden Verbindung in einem Elektrolysator mit mindestens einer Anode und mindestens einer Kathode unter Erzeugung von Wasserstoff, Distickstoffoxid und Stickstoff oder Wasserstoff, Stickstoff und Sauerstoff an der Kathode elektrolytisch spaltet.

2. Verfahren nach Anspruch 1, dadurch gekennzeichnet, daß man an der Kathode einen Kondensator aus

   a) der negativen Kathodenoberfläche,
   b) positiven Protonen als positiver Kondensatoroberfläche und
   c) einem Gemisch aus Stickstoff und Sauerstoff als Dielektricum erzeugt.

3. Verfahren nach Anspruch 1, dadurch gekennzeichnet, daß man Wasser, wäßrige oder organische Systeme bei einer an die Elektroden angelegten Spannung von 2 bis 1000 Volt und einer Stromdichte von 0,001 Ampère/$mm^2$ bis 10 Ampère/$mm^2$ elektrolytisch spaltet.

4. Verfahren nach einem der Ansprüche 1 bis 3, dadurch gekennzeichnet, daß man als Elektrolyten eine Stickstoff enthaltende Verbindung verwendet.

5. Verfahren nach einem der Ansprüche 1 bis 4, dadurch gekennzeichnet, daß man eine Kathode aus Titan oder einer Titanlegierung, Tantal oder einer Tantallegierung, Wolfram oder einer Wolframlegierung verwendet.

6. Verfahren nach einem der Ansprüche 1 bis 5, dadurch gekennzeichnet, daß man eine Anode aus Titan, einer Titanlegierung, Tantal oder einer Tantallegierung, Platin, Aluminium, Graphit, Gold, Blei oder einer Nickel-Chromlegierung verwendet.

7. Verfahren nach einem der Ansprüche 1 bis 6, dadurch gekennzeichnet, daß manbei einer Spannung von 12 bis 50 Volt arbeitet.

8. Verfahren nach einem der Ansprüche 1 bis 7, dadurch gekennzeichnet, daß man bei einer Stromdichte von 0,1 bis 10 Ampère/$mm^2$ arbeitet.

9. Verfahren nach einem der Ansprüche 1 bis 8, dadurch gekennzeichnet, daß man die anodische Stromdichte kleiner wählt als die kathodische Stromdichte.

10. Verfahren nach einem der Ansprüche 1 bis 9, dadurch gekennzeichnet, daß der geringste Abstand von Kathode zu Anode 0,1 mm bis 50 mm, insbesondere von 1 bis 10 mm, beträgt.

11. Verfahren nach einem der Ansprüche 1 bis 10, dadurch gekennzeichnet, daß man Wasser, ein wäßriges oder ein organisches System elektrolysiert, das eine Stickstoff enthaltende Verbindung gelöst enthält.

12. Verfahren nach Anspruch 11, dadurch gekennzeichnet, daß man Wasser, ein wäßriges oder ein organisches System elektrolysiert, das einen Stickstoff enthaltenden Elektrolyten gelöst enthält.

13. Verfahren nach einem der Ansprüche 1 bis 12, dadurch gekennzeichnet, daß die Elektroden einander nach Art einer Zündkerze gegenüber-liegen.

14. Verfahren nach einem der Ansprüche 1 bis 13, dadurch gekennzeichnet, daß man eine Anode verwendet, deren Oberfläche größer ist als die der Kathode.

15. Verfahren nach einem der Ansprüche 1 bis 14, dadurch gekennzeichnet, daß sowohl die Kathode als auch die Anode in das Wasser, das wäßrige System oder das organische System eintauchen.

16. Verfahren nach einem der Ansprüche 1 bis 14, dadurch gekennzeichnet, daß lediglich die Anode in das Wasser, das wäßrige System oder das organische System eintaucht und die Kathode über der Wasseroberfläche oder Oberfläche des wäßrigen oder organischen Systems angeordnet ist.

17. Verfahren nach Anspruch 16, dadurch gekennzeichnet, daß die Kathode die Wasseroberfläche oder die Oberfläche des wäßrigen oder organischen Systems gerade berührt.

18. Verfahren nach einem der Ansprüche 1 bis 17, dadurch gekennzeichnet, daß man als wäßriges System Meerwasser verwendet.

19. Verfahren nach Anspruch 18, dadurch gekennzeichnet, daß man Meerwasser unter Zusatz einer Stickstoff enthaltenden Verbindung verwendet.

20. Verfahren nach einem der Ansprüche 1 bis 18, dadurch gekennzeichnet, daß man als organisches System einen Alkohol und eine Säure verwendet, dem man gegebenenfalls eine Stickstoff liefernde Verbindung zusetzt.

21. Verfahren nach Anspruch 20, dadurch gekennzeichnet, daß man ein organisches System aus Phosphorsäure, einem Alkohol und einer Stickstoff liefernden Verbindung verwendet.

22. Verfahren nach Anspruch 21, dadurch gekennzeichnet, daß man ein organisches System aus Phosphorsäure, Methyl- oder Äthylalkohol und einem Nitrat verwendet.

23. Verfahren nach einem der Ansprüche 1 bis 19, dadurch gekennzeichnet, daß man die bei der elektrolytisch-thermischen Spaltung an der Kathode erzeugte Wärmeenergie zur Verdampfung von Wasser ausnutzt und von der Kathode oder aus dem Elektrolysator ein Gemisch aus Wasserstoff, Stickstoff, Sauerstoff und Wasserdampf abzieht.

----

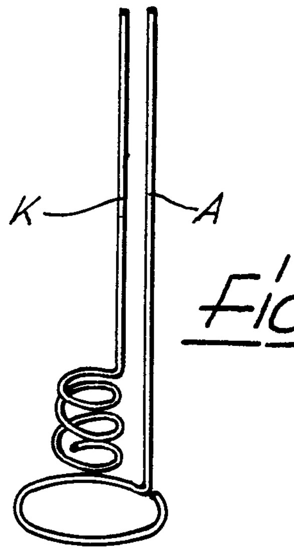


Fig.1.

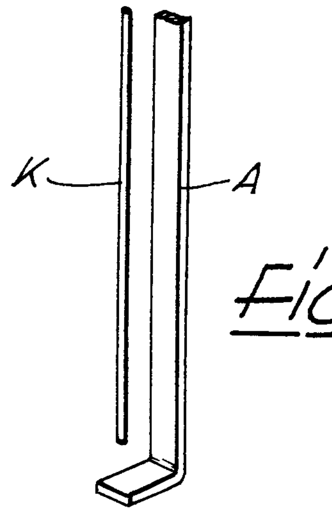


Fig.2.

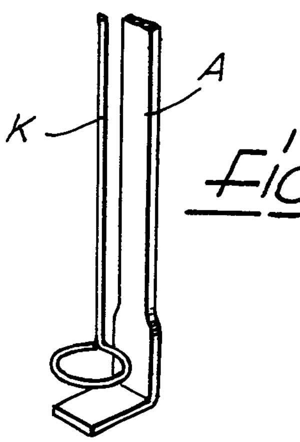


Fig.3.

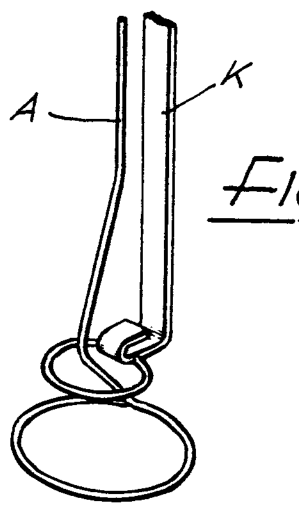


Fig.4.

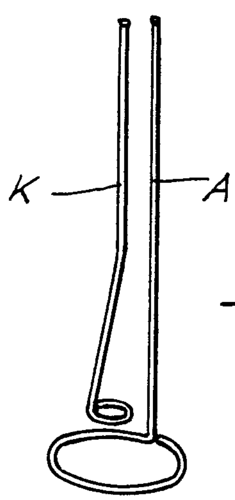


Fig.5.

Dr. Szmuel Reznik und
Josef Glezerman
Reg.Nr. 125 750

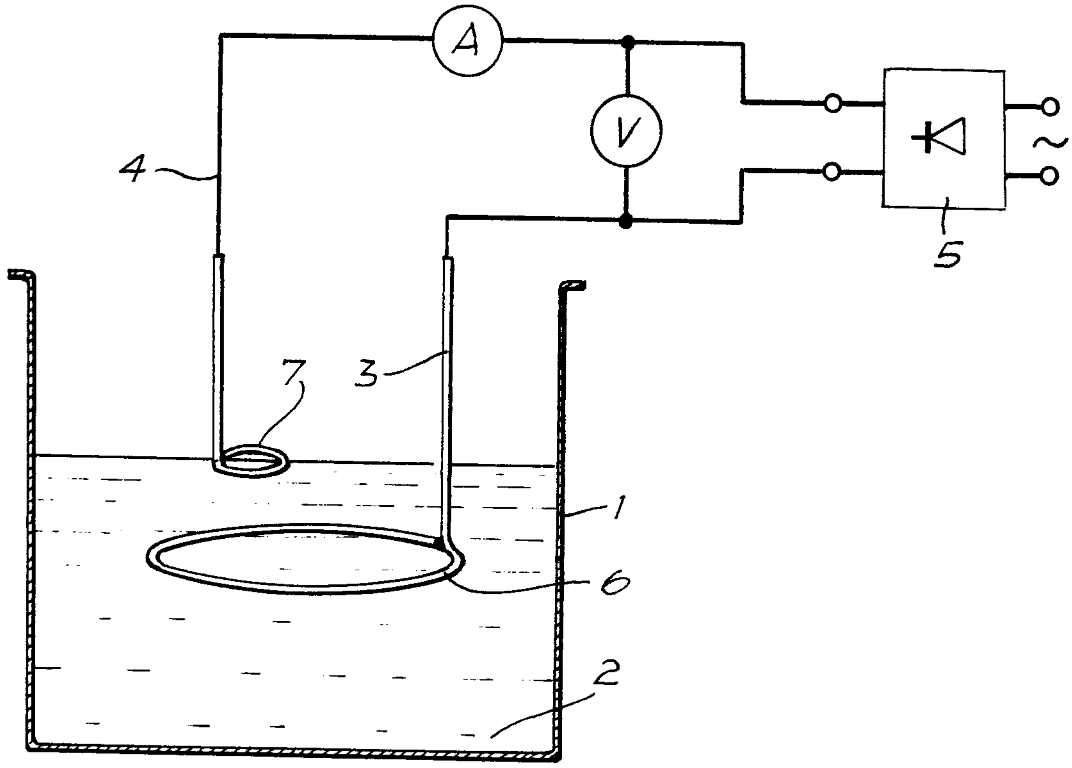


Fig.6.

Dr. Szmuel Reznik und
Josef Glezerman
Reg.Nr. 125 750